# EUROPÄISCHE PATENTSCHRIFT

(11) **EP 2 212 600 B1**
(45) Veröffentlichungstag und Bekanntmachung des Hinweises auf die Patenterteilung: **22.02.2012**
(21) Anmeldenummer: 08734852.0
(22) Anmeldetag: 28.03.2008
(51) Int. Cl.: F16K 27/00

(54) **VENTILBATTERIE MIT MEHREREN ELEKTRISCH BETÄTIGBAREN FLUIDISCHEN VENTILEN**
VALVE ARRAY HAVING A PLURALITY OF ELECTRICALLY ACTUATABLE FLUIDIC VALVES
BATTERIE DE DISTRIBUTEURS COMPORTANT PLUSIEURS DISTRIBUTEURS DE FLUIDES A COMMANDE ELECTRIQUE

(43) Veröffentlichungstag der Anmeldung: 04.08.2010
(73) Patentinhaber: FESTO AG & Co. KG, 73734 Esslingen (DE)
(72) Erfinder: KÜHBAUCH, Heiko, 73257 Köngen (DE); BERNER, Michael, 73230 Kirchheim (DE)
(74) Vertreter: Kocher, Mark Werner
(86) Internationale Anmeldenummer: PCT/EP2008/002479
(87) Internationale Veröffentlichungsnummer: WO 2009/118031

(56) Entgegenhaltungen:
- DE-C1- 19 840 596
- US-A1- 2007 278 436
- US-B1- 6 260 583

## Beschreibung

Die Erfindung betrifft eine Ventilbatterie mit mehreren elektrisch betätigbaren fluidischen Ventilen, deren fluidische Ventilbereiche aneinandergereiht und von wenigstens einem darauf aufsetzbaren elektrischen Betätigungsblock überdeckt sind.

Die US 6,260,583 B1 offenbart eine segmentiert ausgebildete Ventileinheit mit elektrisch betätigbaren Ventilen, die zur Bereitstellung von Druckluft an blockweise zusammengefasste Gruppen von Klebstoffspendeventilen ausgebildet sind. Zur Verteilung der von den elektrisch betätigbaren Ventilen bereitgestellten Druckluft ist jeweils eine Verteilerplatte vorgesehen, so dass die Klebstoffspendeventile innerhalb der jeweiligen Gruppen pneumatisch synchron vom zugeordneten Ventil über die Verteilerplatte mit Druckluft angesteuert werden können.

Die US 2007/0278436 A1 offenbart eine Koppelplatte für eine festgelegte Anzahl von Ventilen, die sowohl in elektrischer als auch in fluidischer Hinsicht jeweils einzeln und zentral von der Koppelplatte versorgt werden. Die fluidischen benachbarter Ventilbereiche sind nicht aneinandergereiht, sondern jeweils direkt mit der Koppelplatte verbunden. Die elektrische Ansteuerung der Ventile wird ebenfalls direkt von der Koppelplatte aus vorgenommen. Die Variabilität ist gering, da die Koppelplatte die Anzahl der Ventile limitiert und bei einer geringen Anzahl von Ventilen auf der Koppelplatte eine unvorteilhafte Raumausnutzung vorliegt.

Aus der DE 19840596 C1 ist eine derartige Ventilbatterie bekannt, deren plattenförmige Ventilbereiche durch einen einzigen elektrischen Betätigungsblock überdeckt sind. Über diesen Betätigungsblock können die einzelnen plattenförmigen Ventilbereiche gesteuert beziehungsweise betätigt werden, wobei Steuermittel im Betätigungsblock und/oder in einer entfernten Zentralstation angeordnet sein können, die über Busleitungen mit dem Betätigungsblock verbunden ist.

Nachteilig an den bekannten Ventilbatterien ist die geringe Flexibilität, das heißt, wenn die Zahl der fluidischen Ventilbereiche in der Ventilbatterie variiert, muss jeweils ein anderer Betätigungsblock in der jeweils angepassten Dimensionierung bereitgestellt werden. Neben der Anpassung der geometrischen Dimensionierung muss auch die Zahl der Betätigungsanschlüsse des jeweiligen Betätigungsblocks variieren. Diese bedeutet, es muss eine große Zahl unterschiedlicher Betätigungsblöcke bereitgestellt werden, um kundenspezifisch gewünschte Ventilbatterien bereitzustellen.

Eine Aufgabe der vorliegenden Erfindung besteht darin, einen flexibleren Aufbau einer solchen Ventilbatterie zu ermöglichen und die Lagerhaltung von Betätigungsblöcken zu reduzieren.

Diese Aufgabe wird erfindungsgemäß durch eine Ventilbatterie mit den Merkmalen des Anspruchs 1 gelöst.

Bei der erfindungsgemäßen sind zur Anpassung einer nahezu beliebigen Anzahl von aneinandergereihten fluidischen Ventilbereichen mehrere Betätigungsblöcke vorgesehen, von denen wenigstens einer die mehrfache Breite eines Ventilbereichs aufweist. Durch Kombination von solchen unterschiedlichen Betätigungsblöcken kann eine Anpassung an die jeweilige Zahl von fluidischen Ventilbereichen in einfacher Weise erfolgen. Diese Lösung hat auch den Vorteil gegenüber einer Vielzahl von Betätigungsblöcken, die jeweils die Breite eines Ventilbereichs besitzen, dass die Zahl der elektrischen Schnittstellen von Betätigungsblock zu Betätigungsblock reduziert wird. Solche Schnittstellen sind gewöhnlich Multipolsteckverbindungen, die kostenintensiv sind, so dass erfindungsgemäß hier eine Kostenreduzierung möglich ist. Schon eine geringe Anzahl von genormten Betätigungsblöcken, beispielsweise Betätigungsblöcken mit einfacher, doppelter und vierfacher Breite eines fluidischen Ventilbereichs, kann in kostensparender und flexibler Weise die elektrischen Anschlüsse an die Ventilbatterien mit variabler Zahl von fluidischen Ventilbereichen hergestellt werden.

Der elektronische Steuerblock zur Steuerung der Ventile ist zweckmäßigerweise an einem der beiden Endbereiche der Ventilbatterie oder mittig angeordnet und kann als eigenständiges Element angereiht werden oder bildet zusammen mit einem Betätigungsblock eine Einheit. Alternativ hierzu kann der Steuerblock auch als separate Einheit beabstandet bzw. entfernt angeordnet und über ein Kabel mit der übrigen Ventilbatterie verbunden sein.

Zur elektrischen Verbindung des Steuerblocks mit den einzelnen Betätigungsblöcken ist eine quer durch die Betätigungsblöcke verlaufende Steuer- und/oder Versorgungsleitungsanordnung vorgesehen, die in vorteilhafter weise jeweils über Multipolsteckverbindungen von Betätigungsblock zu Betätigungsblock geführt ist. Diese Leitungsanordnung weist zweckmäßigerweise Busleitungen auf, wobei dann in jedem Betätigungsblock eine entsprechende Busstation angeordnet ist.

Durch die in den Unteransprüchen aufgeführten Maßnahmen sind vorteilhafte Weiterbildungen und Verbesserungen der im Anspruch 1 angegebenen Ventilbatterie möglich.

Die erfindungsgemäße Lösung eignet sich insbesondere für plattenförmig ausgebildete Ventilbereiche.

Der Steuerblock besitzt zweckmäßigerweise Anschlüsse und/oder Mittel zur drahtlosen Verbindung mit einer externen Zentralstation, wobei diese Anschlüsse bevorzugt als Busschnittstellen und/oder Multipolanschlüsse ausgebildet sind. Durch die Verbindung mit der Zentralstation kann die Steuerung der elektrisch betätigbaren Ventile durch die Zentralstation und/oder durch den Steuerblock erfolgen, der zur Steuerung eine entsprechende elektronische Steuervorrichtung enthält, beispielsweise einen Mikrocontroller. Auch die einzelnen Betätigungsblöcke können elektronische Steuervorrichtungen, wie Mikrocontroller, enthalten, um einzelne Steuerfunktionen unabhängig vom Steuerblock und unabhängig von der Zentralstation durchführen zu können.

Die Betätigungsblöcke enthalten bevorzugt Vorsteuerventile zur Vorsteuerung der Ventile der zugeordneten Ventilbereiche, so dass diese keinerlei elektrische Komponenten enthalten müssen.

Die Betätigungsblöcke weisen bevorzugt elektrische Anschlüsse für externe Sensoren und/oder Aktoren auf.

Zweckmäßigerweise sind die Betätigungsblöcke aufsteckbar und/oder anschraubbar ausgebildet, wobei nach der entsprechenden Befestigung automatisch die fluidischen Anschlüsse zwischen Vorsteuerventilen und Ventilen oder die elektrischen Verbindungen zu den Vorsteuerventilen hergestellt sind, falls diese in den fluidischen Ventilbereichen angeordnet sind.

Ausführungsbeispiele der Erfindung sind in der Zeichnung dargestellt und in der nachfolgenden Beschreibung näher erläutert. Es zeigen:
- Figur 1: eine Ventilbatterie mit zwei unterschiedlich breiten Betätigungsblöcken und einem eigenständigen Steuerblock als erstes Ausführungsbeispiel der Erfindung,
- Figur 2: eine Ventilbatterie mit drei unterschiedlich breiten Betätigungsblöcken und einem Steuerblock, der zusammen mit einem Betätigungsblock eine Einheit bildet, als zweites Ausführungsbeispiel der Erfindung,
- Figur 3: eine perspektivische Darstellung eines einzelnen fluidischen Ventilbereichs mit aufgesetztem Betätigungsblock gleicher Breite, wie er in Figur 2 dargestellt ist, und
- Figur 4: eine perspektivische Darstellung von zwei aneinandergereihten fluidischen Ventilbereichen mit einem aufgesetzten Betätigungsblock, der die Breite von zwei Ventilbereichen besitzt und mit Anschlüssen für externe Sensoren und/oder Aktoren versehen ist.

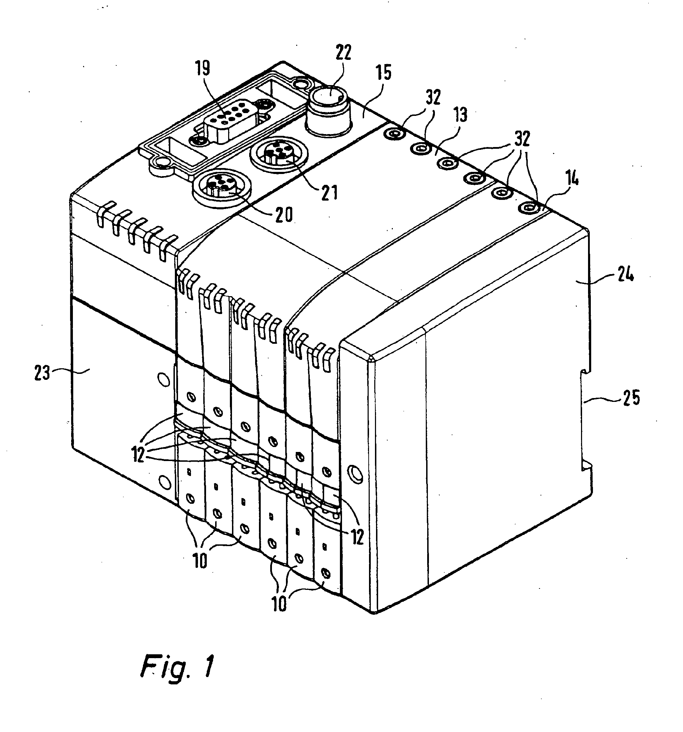

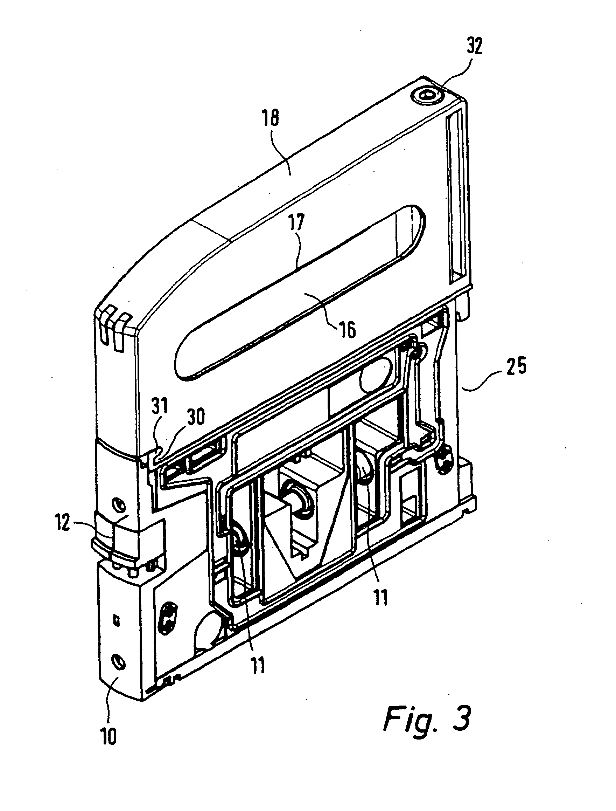

Die in Figur 1 als erstes Ausführungsbeispiel dargestellte Ventilbatterie besitzt sechs aneinandergereihte fluidische Ventilbereiche 10, die nach Art von Plattenventilen ausgebildet sind. Ein solcher Ventilbereich ist in Figur 3 separat in perspektivischer Darstellung abgebildet. Er enthält in üblicher Weise die erforderlichen oder gewünschten Ventilglieder 11 sowie die entsprechenden Zuführungs- und Abführungsleitungen, die bei aneinandergereihten Ventilbereichen so miteinander fluchten, dass fluidische Kanäle gebildet werden. Dabei kann jeder Ventilbereich 10 ein Ventilglied 11 beziehungsweise Ventil oder mehrere Ventilglieder 11 enthalten, wobei die Ventilbereiche 10 manuelle Ventilbetätigungseinrichtungen 12 aufweisen, um das jeweilige Ventil unabhängig von der elektrischen Steuerung manuell betätigen zu können.

Die sechs Ventilbereiche 10 werden von zwei darauf aufsetzbaren elektrischen Betätigungsblöcken 13, 14 überdeckt. Diese enthalten in nicht dargestellter Weise die elektromagnetischen Vorsteuerventile für die fluidischen Ventile in den Ventilbereichen 10. Ausgehend von einem elektronischen Steuerblock 15 an einem Endbereich der beiden Betätigungsblöcke 13, 14 verläuft eine ebenfalls nicht dargestellte Steuer- und/oder-Versorgungsleitungsanordnung 16 quer durch die Betätigungsblöcke 13, 14. Die erforderlichen elektrischen Verbindungen zwischen dem Steuerblock 15 und dem Betätigungsblock 13 sowie zwischen dem Betätigungsblock 13 und dem Betätigungsblock 14 besorgen Multipolsteckverbindungen 17, von denen eine in Figur 3 schematisch dargestellt ist. Beim Aneinanderstecken von mit Betätigungsblöcken 13 beziehungsweise 14 versehenen Ventilbereichen 10 werden die elektrischen Verbindungen mittels dieser Multipolsteckverbindungen 17 automatisch hergestellt.

Die Steuer- und/oder Versorgungsleitungsanordnung 16 kann auch Busleitungen enthalten, insbesondere zur Übertragung von Steuersignalen zur Steuerung der Ventile oder zur Steuerung von externen Aktoren oder zur Übertragung von Rückmeldungen, insbesondere von Sensorsignalen zum Steuerblock 15. Für diesen Fall besitzt jeder Steuerblock 15 eine Busstation (Busknoten), um die seriellen Bussignale in Steuer- beziehungsweise Schaltsignale für die Vorsteuerventile oder Ventile umzuwandeln und um Sensorsignale in serielle Rückmeldesignale umzuwandeln. Weiterhin können die Betätigungsblöcke 13, 14 auch selbständige Ventilsteuerfunktionen aufweisen, wozu sie beispielsweise jeweils einen Mikrocontroller besitzen. Dieser ist zur Kommunikation mit dem Steuerblock 15 über die Steuer- und/oder Versorgungsleitungsanordnung 16 ausgebildet, wobei die Verteilung der Steuerfunktionen beliebig sein kann.

Der Betätigungsblock 13, der sich dem Steuerblock 15 anschließt, übergreift vier Ventilbereiche 10, während der zweite Betätigungsblock 13 zwei Ventilbereiche 10 übergreift. Hierdurch können Multipolsteckverbindungen 17, Busstationen und Mikrocontroller eingespart werden, da jeder Betätigungsblock 13, 14 unabhängig von der Zahl der zu betätigenden Ventilbereiche 10 nur zwei Multipolsteckverbindungen 17 an seinen beiden Seiten, nur je eine Busstation und nur je einen Mikrocontroller benötigt, sofern Busstationen und Mikrocontroller vorgesehen sind. Diese können dann die Steuerfunktionen für alle zugeordneten Ventilbereiche 10 übernehmen. Würde jeder Ventilbereich 10 einen eigenen Betätigungsblock besitzen, so müsste sich die Zahl der Multipolsteckverbindungen 17, der Busstationen und Mikrocontroller wesentlich erhöhen.

In dem in Figur 1 dargestellten Ausführungsbeispiel besitzt der Betätigungsblock 13 die vierfache Breite eines Ventilbereichs 10 und der Betätigungsblock 14 die doppelte Breite. Zusätzlich kann ein entsprechendes Baukastensystem auch Betätigungsblöcke 18 mit der einfachen Breite eines Ventilbereichs 10 aufweisen, wie dies aus Figur 3 hervorgeht. Mit einer solchen Abstufung kann eine beliebige Zahl von aneinandergereihten Ventilbereichen 10 mit einer passenden Anordnung von Betätigungsblöcken so versehen werden, dass möglichst wenig Betätigungsblöcke erforderlich sind. Selbstverständlich können auch noch Betätigungsblöcke mit anderen Rastermaßen realisiert werden.

Der Steuerblock 15 besitzt eine Multipolsteckdose 19 sowie zwei Busschnittstellen 20, 21 zur Anschluss von externen Busleitungen. Beispielsweise ist die Busschnittstelle 20 über ein Buskabel mit einer externen Steuerzentrale verbindbar, während die Busschnittstelle 21 über ein Buskabel mit weiteren Ventilbatterien oder anderen Steuersystemen verbindbar ist. Auch über die Multipolsteckdose 19 können Steuersignale und/oder Versorgungsspannungen zugeführt und/oder abgeführt werden. Eine weitere Steckdose 22 dient zum Anschluss an wenigstens eine Versorgungsspannung. Die beschriebenen Steckdosen und Schnittstellen können selbstverständlich auch nur zum Teil realisiert sein.

Der Steuerblock 15 ist auf einem Unterblock 23 aufgesetzt, der in Reihe zu den Ventilbereichen 10 angeordnet ist. Er dient beispielsweise als fluidischer Anschlussblock und kann mit fluidischen Zufuhr- und/oder Auslassleitungen verbunden werden. Der Steuerblock 15 kann auch zusammen mit dem Unterblock 23 einen einheitlichen Block bilden.

Am dem Steuerblock 15 gegenüberliegenden Endbereich der Ventilbatterie ist ein Abschlussblock 24 angereiht, der beispielsweise die fluidischen Leitungen verschließt, die quer durch die Ventilbereiche 10 verlaufen. Er kann auch als fluidischer Anschlussblock ausgebildet sein.

Der Abschlussblock 24 und entsprechend die sich daran anschließenden Ventilbereiche 10 und der Unterblock 23 besitzen an der Rückseite eine Halteausnehmung 25, durch die die Ventilbatterie an einer Halteschiene ansteckbar beziehungsweise befestigbar ist.

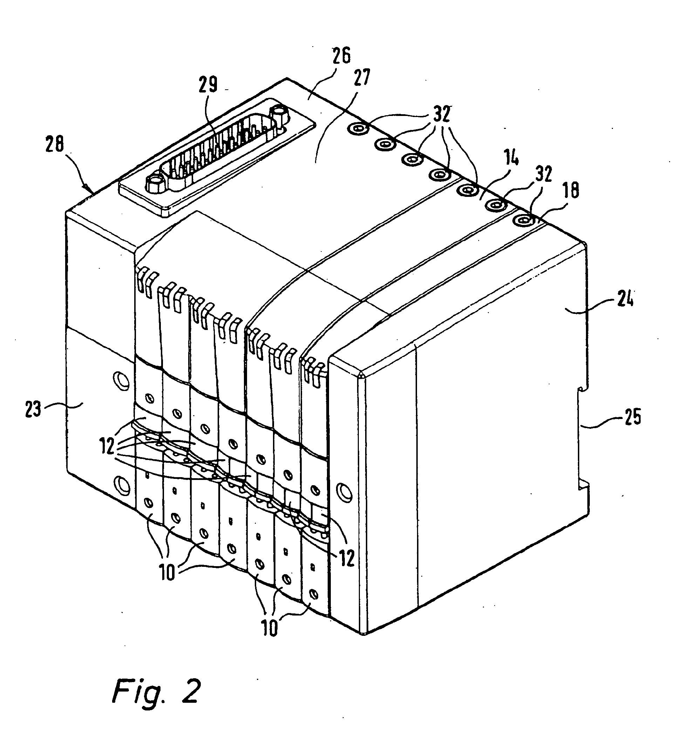

Die in Figur 2 als zweites Ausführungsbeispiel dargestellte Ventilbatterie entspricht weitgehend dem ersten Ausführungsbeispiel, so dass gleiche oder gleichwirkende Bauteile oder Baugruppen mit denselben Bezugszeichen versehen und nicht nochmals beschrieben sind.

Im Unterschied zum ersten Ausführungsbeispiel bildet hier ein Steuerblock 26 zusammen mit einem Betätigungsblock 27 einen integrierten Einheitsblock 28. Der Betätigungsblock 27 besitzt die vierfache Breite eines Ventilbereichs 10, jedoch kann diese Breite selbstverständlich auch variieren. An den Einheitsblock 28 schließt sich ein Betätigungsblock 14 von doppelter Breite eines Ventilbereichs 10 und ein Betätigungsblock 18 von einfacher Breite an. Dadurch können sieben aneinandergereihte Ventilbereiche 10 überdeckt werden. Der Steuerblock 26 im Einheitsblock 28 besitzt eine einzige Multipolsteckdose 29, über die alle Verbindungen zu einer externen Steuerzentrale und zu einer Versorgungsspannungsquelle hergestellt werden können. Selbstverständlich können auch Anschlüsse gemäß dem ersten Ausführungsbeispiel ganz oder teilweise vorgesehen sein.

Figur 3 zeigt in einer separaten Darstellung einen Ventilbereich 10, der von einem Betätigungsblock 18 gleicher Breite übergriffen ist. Zur Befestigung des Betätigungsblocks 18 auf dem Ventilbereich 10 besitzt der Betätigungsblock 18 im vorderen Bereich an seiner Unterseite eine Haltenase 30, die einen entsprechenden Haltebereich 31 des Ventilbereichs 10 untergreift. An der Rückseite greif eine sich durch den Betätigungsblock 18 zum Ventilbereich 10 hin erstreckende Halteschraube 32 in eine entsprechende, nicht dargestellte Gewindeöffnung des Ventilbereichs 10 ein. Nach erfolgter Befestigung des Betätigungsblocks 18 auf dem Ventilbereich 10 sind dann automatisch die fluidischen Verbindungen zwischen den Vorsteuerventilen im Betätigungsblock 18 und den Ventilen im Ventilbereich 10 hergestellt. Falls ein Vorsteuerventil oder mehrere Vorsteuerventile im Ventilbereich 10 angeordnet sein sollten, so werden entsprechend nach Befestigung des Betätigungsblocks 18 automatisch die elektrischen Verbindungen über entsprechende Kontaktelemente hergestellt.

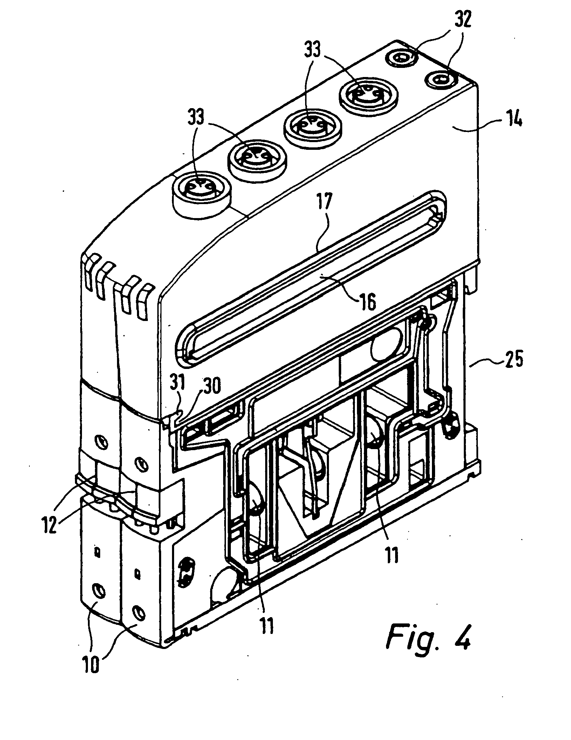

In Figur 4 sind zwei aneinandergereihte Ventilbereiche 10 dargestellt, die von einem gemeinsamen Betätigungsblock 14 übergriffen sind. Die Befestigung dieses Betätigungsblocks 14 erfolgt entsprechend dem Betätigungsblock 18 in Figur 3. Anstelle einer Halteschraube 32 treten jetzt infolge der doppelten Breite zwei Halteschrauben 32.

Der Betätigungsblock 14 ist hier an seiner Oberseite mit vier Schnittstellen 33 versehen, bei denen es sich um Busschnittstellen oder übliche Steckdosen handeln kann. Hierdurch können externe Aktoren und/oder Sensoren angeschlossen werden, um im Falle von Aktoren über den Steuerblock 15, 26 gesteuert zu werden oder um entsprechende Sensorrückmeldungen zu diesen zu übertragen. Falls der Betätigungsblock 14 mit einem Mikrocontroller versehen sein sollte und eigene Steuerfunktionen besitzen sollte, so könnte die Steuerung der externen Aktoren auch wenigstens teilweise über diesen Mikrocontroller erfolgen, wobei die Sensorrückmeldungen dann auch an diesen rückgemeldet werden können.

Selbstverständlich können auch die anderen Betätigungsblöcke 13, 18 mit solchen oder ähnlichen Schnittstellen 33 versehen sein, deren Zahl und Ausgestaltung variieren kann.

Anstelle von Leitungs- beziehungsweise Busverbindungen zu einer externen Zentralstation können die Steuerblöcke 15, 26 auch Mittel zur drahtlosen Kommunikation besitzen, beispielsweise Funksendeempfänger.

Der elektronische Steuerblock zur Steuerung der Ventile kann auch in einer alternativen Ausführung der Ventilbatterie mittig in dieser angeordnet sein oder kann auch als separate Einheit beabstandet bzw. entfernt angeordnet und über ein Kabel mit der übrigen Ventilbatterie verbunden sein.

## Patentansprüche

1. Ventilbatterie mit mehreren elektrisch betätigbaren fluidischen Ventilen, deren fluidische Ventilbereiche (10) aneinandergereiht und von wenigstens zwei darauf aufsetzbaren elektrischen Betätigungsblöcken (13, 14, 18) überdeckt sind, von denen wenigstens einer (13, 14) die mehrfache Breite eines Ventilbereichs (10) aufweist, wobei ein elektronischer Steuerblock (15; 26) zur Steuerung der Ventile vorgesehen ist angereiht oder beabstandet angeordnet ist und wobei eine vom Steuerblock (15; 26) aus quer durch die Betätigungsblöcke (13, 14, 18, 27) verlaufende Steuer- und/oder Versorgungsleitungsanordnung (16) vorgesehen ist.

2. Ventilbatterie nach Anspruch 1, **dadurch gekennzeichnet, dass** die Ventilbereiche (10) plattenförmig ausgebildet sind.

3. Ventilbatterie nach Anspruch 1 oder 2, **dadurch gekennzeichnet, dass** der elektronische Steuerblock (15; 26) an einem der beiden Endbereiche der Ventilbatterie oder mittig angeordnet ist.

4. Ventilbatterie nach Anspruch 3, **dadurch gekennzeichnet, dass** der Steuerblock (15) als eigenständiges Element angereiht ist.

5. Ventilbatterie nach Anspruch 3, **dadurch gekennzeichnet, dass** der Steuerblock (26) zusammen mit einem Betätigungsblock (27) eine Einheit (28) bildet.

6. Ventilbatterie nach einem der vorhergehenden Ansprüche, **dadurch gekennzeichnet, dass** die Steuer- und/oder Versorgungsleitungsanordnung (16) jeweils über Multipolsteckverbindungen (17) von Betätigungsblock zu Betätigungsblock geführt ist.

7. Ventilbatterie nach einem der vorhergehenden Ansprüche, **dadurch gekennzeichnet, dass** die Steuer- und/oder Versorgungsleitungsanordnung (16) Busleitungen aufweist und dass in jedem Betätigungsblock (13, 14, 18, 27) eine Busstation angeordnet ist.

8. Ventilbatterie nach einem der vorhergehenden Ansprüche, **dadurch gekennzeichnet, dass** der Steuerblock (15; 26) Anschlüsse (19-22; 29) und/oder Mittel zur drahtlosen Verbindung mit einer externen Zentralstation besitzt.

9. Ventilbatterie nach Anspruch 8, **dadurch gekennzeichnet, dass** die Anschlüsse (19-22; 29) Busschnittstellen und/oder Multipolanschlüsse sind.

10. Ventilbatterie nach einem der vorhergehenden Ansprüche, **dadurch gekennzeichnet, dass** die Betätigungsblöcke (13, 14, 18) elektronische Steuervorrichtungen, insbesondere Mikrocontroller, enthalten.

11. Ventilbatterie nach einem der vorhergehenden Ansprüche, **dadurch gekennzeichnet, dass** die Betätigungsblöcke (13, 14, 18, 27) Vorsteuerventile zur Vorsteuerung der Ventile der zugeordneten Ventilbereiche (10) enthalten.

12. Ventilbatterie nach einem der vorhergehenden Ansprüche, **dadurch gekennzeichnet, dass** die Betätigungsblöcke (13, 14, 18, 27) die einfache und/oder doppelte und/oder vierfache Breite eines Ventilbereichs (10) aufweisen.

13. Ventilbatterie nach einem der vorhergehenden Ansprüche, **dadurch gekennzeichnet, dass** die Betätigungsblöcke (14) elektrische Anschlüsse (33) für externe Sensoren und/oder Aktoren besitzen.

14. Ventilbatterie nach einem der vorhergehenden Ansprüche, **dadurch gekennzeichnet, dass** die Betätigungsblöcke (13, 14, 18, 27) aufsteckbar und/oder anschraubbar ausgebildet sind.

## Claims

1. Valve bank with several electrically actuable fluidic valves, with fluidic valve sections (10) lined up side by side and covered by at least two electrical actuating blocks (13; 14, 18) which may be laid upon them, at least one (13, 14) of which has several times the width of one valve section (10), wherein an electronic control block (15; 26) to control the valves is provided, arranged alongside or at a distance, and wherein a control and/or supply line assembly (16) is provided, running from the control block (15; 26) transversely through the actuating blocks (13, 14, 18, 27).

2. Valve bank according to claim 1, **characterised in that** the valve sections (10) are plate-shaped.

3. Valve bank according to claim 1 or 2, **characterised in that** the electronic control block (15; 26) is located at one of the two end sections or in the middle of the valve bank.

4. Valve bank according to claim 3, **characterised in that** the control block (15) is lined up as an independent element.

5. Valve bank according to claim 3, **characterised in that** the control block (26) together with an actuating block (27) forms a unit (28).

6. Valve bank according to any of the preceding claims, **characterised in that** the control and/or supply line assembly (16) is led via multipole plug connectors (17) from one actuating block to another.

7. Valve bank according to any of the preceding claims, **characterised in that** the control and/or supply line assembly (16) has bus lines, and that a bus station is provided in each actuating block (13, 14, 18, 27).

8. Valve bank according to any of the preceding claims, **characterised in that** the control block (15; 26) has connections (19-22; 29) and/or means of wireless connection with an external control centre.

9. Valve bank according to claim 8, **characterised in that** the connections (19-22; 29) are bus interfaces and/or multipole connections.

10. Valve bank according to any of the preceding claims, **characterised in that** the actuating blocks (13, 14, 18) contain electronic control devices, in particular microcontrollers.

11. Valve bank according to any of the preceding claims, **characterised in that** the actuating blocks (13, 14, 18, 27) contain pilot valves for piloting the valves of the assigned valve sections (10).

12. Valve bank according to any of the preceding claims, **characterised in that** the actuating blocks (13, 14, 18, 27) have the same and/or double and/or four times the width of a valve section (10).

13. Valve bank according to any of the preceding claims, **characterised in that** the actuating blocks (14) have electrical connections (33) for external sensors and/or actuators.

14. Valve bank according to any of the preceding claims, **characterised in that** the actuating blocks (13, 14, 18, 27) may be plugged in or bolted on.

## Revendications

1. Batterie de distributeurs avec plusieurs distributeurs fluidiques à commande électrique, dont les zones de distributeur fluidique (10) sont alignées les unes contre les autres et recouvertes par au moins deux blocs d'actionnement électriques (13,14) pouvant être posés dessus, au moins l'un de ces blocs (13, 14) présentant une largeur multiple d'une zone de distributeur (10), un bloc de commande électronique (15 ; 26) pour la commande des distributeurs, étant disposé en alignement ou à distance, et un dispositif de ligne de commande et/ou d'alimentation (16) étant prévu qui s'étend à partir du bloc de commande (15 ; 26) transversalement à travers les blocs d'actionnement (13, 14, 18, 27).

2. Batterie de distributeurs selon la revendication 1, **caractérisée en ce que** les zones de distributeur (10) sont réalisées en forme de plaques.

3. Batterie de distributeurs selon la revendication 1 ou 2, **caractérisée en ce que** le bloc de commande électronique (15 ; 26) est disposé à l'une des deux zones d'extrémité de la batterie de distributeurs ou au milieu.

4. Batterie de distributeurs selon la revendication 3, **caractérisée en ce que** le bloc de commande (15) est disposé en rangée en tant qu'élément indépendant.

5. Batterie de distributeurs selon la revendication 3, **caractérisée en ce que** le bloc de commande (26) forme une unité (28) ensemble avec un bloc d'actionnement (27).

6. Batterie de distributeurs selon l'une des revendications précédentes, **caractérisée en ce que** le dispositif de ligne de commande et/ou d'alimentation (16) est guidé respectivement d'un bloc d'actionnement à l'autre via des connexions enfichables multipolaires (17).

7. Batterie de distributeurs selon l'une des revendications précédentes, **caractérisée en ce que** le dispositif de ligne de commande et/ou d'alimentation (16) présente des lignes de bus et **en ce qu'**une station de bus est disposée dans chaque bloc d'actionnement (13, 14, 18, 27).

8. Batterie de distributeurs selon l'une des revendications précédentes, **caractérisée en ce que** le bloc de commande (15 ; 26) possède des points de raccordement (19-22 ; 29) et/ou des moyens pour la connexion sans fil avec une station centrale externe.

9. Batterie de distributeurs selon la revendication 8, **caractérisée en ce que** les points de raccordement (19-22 ; 29) sont des interfaces de bus et/ou des points de raccordement multipolaires.

10. Batterie de distributeurs selon l'une des revendications précédentes, **caractérisée en ce que** les blocs d'actionnement (13, 14, 18) contiennent des dispositifs de commande électroniques, en particulier des microcontrôleurs.

11. Batterie de distributeurs selon l'une des revendications précédentes, **caractérisée en ce que** les blocs d'actionnement (13, 14, 18, 27) contiennent des distributeurs pilote pour piloter les distributeurs des zones de distributeur (10) associées.

12. Batterie de distributeurs selon l'une des revendications précédentes, **caractérisée en ce que** les blocs d'actionnement (13, 14, 18, 27) présentent une largeur simple et /ou double et/ou multiple d'une zone de distributeur (10).

13. Batterie de distributeurs selon l'une des revendications précédentes, **caractérisée en ce que** les blocs d'actionnement (14) possèdent des points de raccordement électriques (33) pour des capteurs et/ou actionneurs externes.

14. Batterie de distributeurs selon l'une des revendications précédentes, **caractérisée en ce que** les blocs d'actionnement (13, 14, 18, 27) sont réalisés de manière à pouvoir être enfichables et/ou vissés.
